# EUROPÄISCHE PATENTANMELDUNG

(11) **EP 1 251 674 A2**
(43) Veröffentlichungstag der Anmeldung: **23.10.2002**
(21) Anmeldenummer: 02008642.7
(22) Anmeldetag: 17.04.2002
(51) Int. Cl.: H04M 1/02, H04M 1/725, H04M 1/2755

(54) **Mobiles Telefon**

(30) Priorität: 17.04.2001 DE 20106609 U
(71) Anmelder: Kleine, Peter, 23617 Stockelsdorf (DE)
(72) Erfinder: Kleine, Peter, 23617 Stockelsdorf (DE)
(74) Vertreter: Hemmer, Arnd (DE)

(57) **Zusammenfassung**

Mobiles Telefon (1), das ein Gehäuse (2) aufweist, wobei in das Gehäuse (2) ein optisches Lesegerät (Scanner) (3) integriert ist, das mit dem Telefon (1) in Datenkommunikation steht (Fig. 1).

## Beschreibung

Die Erfindung betrifft ein mobiles Telefon mit einem Gehäuse.

Mobile Telefone (Handys) dieser Art sind hinlänglich bekannt. Es besteht der Bedarf, mittels Mobiltelefonen auch auf elektronischem Wege Geschäfte abwickeln zu können, d. h. sog. "e-commerce" zu betreiben. Dies ist grundsätzlich möglich, allerdings ist die Bedienung und Eingabe am Telefon aufwändig. Problematisch ist dabei, dass hierfür ein recht hoher Einarbeitungsaufwand für die richtige Bedienung des Gerätes erforderlich ist.

Der Erfindung liegt daher die Aufgabe zugrunde, ein mobiles Telefon so auszurüsten, dass es möglich wird, in einfacher Weise und mit geringen Vorkenntnissen "e-commerce" betreiben zu können, so dass hierzu weder Spracheingaben noch umfangreiche manuelle Dateneingaben nötig sind.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie in der Zeichnung angegeben.

Die Lösung dieser Aufgabe durch die Erfindung ist dadurch gekennzeichnet, dass in das Gehäuse des Handys ein optisches Lesegerät (Scanner) integriert ist, das mit dem Telefon in Datenkommunikation steht. Erfindungsgemäß werden also Dateneingaben zur Abwicklung elektronischer Geschäfte über das Handy mittels eines Scanners vorgenommen. Der Aufwand hinsichtlich der händischen Eingabe von Daten, beispielsweise über die Tastatur des Telefons, ist entsprechend reduziert.

Das optische Lesegerät kann als vorzugsweise einzeiliger Scanner ausgebildet sein. Es kann beispielsweise in den Bodenbereich oder in den oberen Bereich des Geräts integriert werden. Bei aufklappbaren Handys kann es in die Klappe integriert sein.

Zur Kontrolle des gescannten Textes wird gemäß einer Weiterbildung eine zusätzliche optische Anzeige vorgesehen, es kann jedoch auch eine optische Anzeige in dem Hauptdisplay erfolgen.

Das Handy kann weiterhin mit einer verschiebbaren Abdeckung ausgestattet werden, durch deren Verschiebung über einen von der Abdeckung betätigten Schalter wahlweise die Telefonfunktion oder die Lesefunktion aktiviert werden kann. Diese Abdeckung kann so ausgebildet sein, dass sie entweder die Tastatur des Telefons oder die Hauptanzeige des Telefons abdecken kann. Somit ist dann jeweils nur der Funktionsteil des Telefons zugänglich, der benötigt wird.

Zur Betätigung des Scanners kann ein Schaltelement vorgesehen werden, mit dem der Scanner aktiviert werden kann. Mit der Aktivierung des Scanners kann gleichzeitig die Sprechfunktion des Telefons deaktiviert werden.

Als Schaltelement kommt beispielsweise ein Drucktaster in Frage, der bei Betätigung das optische Lesegerät aktiviert. Alternativ kann auch ein Schalter vorgesehen werden, der bei Änderung der Position des Telefons im Gravitationsfeld der Erde das optische Lesegerät aktiviert; hierbei ist insbesondere an einen Quecksilberschalter gedacht.

In der Zeichnung sind Ausführungsbeispiele der Erfindung dargestellt. Es zeigen:
- Fig. 1: schematisch in dreidimensionaler Ansicht ein mobiles Telefon in einer ersten Ausführung,
- Fig. 2: eine zur Fig. 1 alternative Ausführung des Telefons,
- Fig. 3: eine weitere alternative Ausführung des Telefons,
- Fig. 4: eine weitere alternative Ausführung des Telefons,
- Fig. 5: das Telefon mit einer verschiebbaren Abdeckung im Betriebsmodus 'Telefonieren",
- Fig. 6: das Telefon gemäß Fig. 5 im Betriebsmodus "Scannen",
- Fig. 7: das Telefon gemäß Fig. 6 unmittelbar vor dem Scannvorgang.

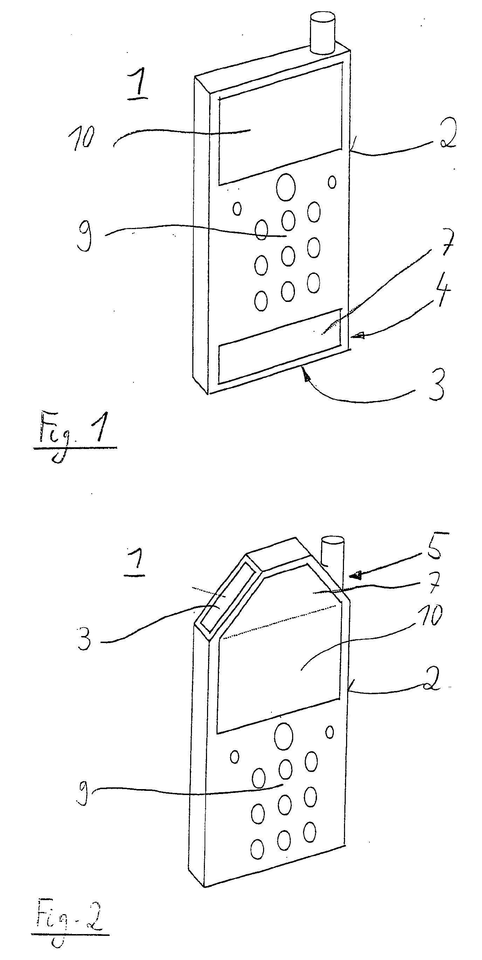

In den Figuren 1 bis 4 sind verschiedene Ausgestaltungen eines mobilen Telefons 1 zu sehen. Es weist ein Gehäuse 2 auf, in das in bekannter Weise die benötigten Komponenten (Mikrofon, Hörer, Elektronik, etc.) eingebaut sind. Das Telefon 1 weist insbesondere in üblicher Weise eine Tastatur 9 und eine Hauptanzeige 10 auf.

Erfindungsgemäß ist in das Gehäuse 2 auch ein optisches Lesegerät (Scanner) 3 integriert. Wie in Fig. 1 zu sehen ist, kann der Scanner 3 im Bodenbereich 4 des Telefons 1 eingebaut sein. Gemäß Fig. 2 ist das Gehäuse 2 dachförmig ausgebildet; in diesem Falle ist der Scanner 3 in dem abgeschrägten oberen Bereich 5 des Telefons 1 integriert. Ferner ist in Fig. 1 bzw. in Fig. 2 zu sehen, dass eine zusätzliche optische Anzeige 7 vorgesehen werden kann, die die gescannte Grafik wiedergibt.

Als Scanner 3 kommt hier ein einzeiliger Scanner mit einer Lesebreite von ca. 1,5 cm x 0,4 cm zum Einsatz. Damit ist eine Klarschrift von ca. 8 bis 15 Zeichen Länge bei einer Darstellung von 8 bis 10 Punkt einlesbar.

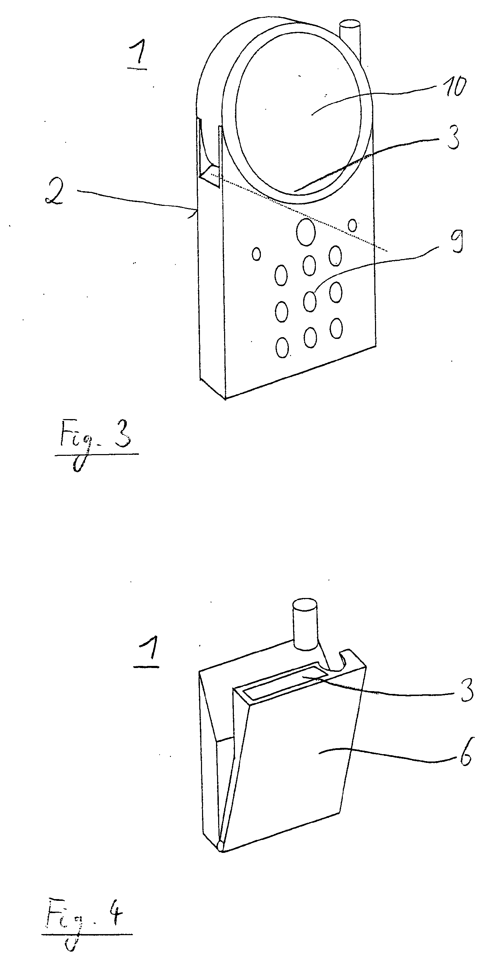

Eine andere Ausgestaltung des Telefons 1 ist in Fig. 3 zu erkennen. Dort ist der Scanner 3 in einen drehbar angeordneten oberen Teil des Telefons integriert, der die Hauptanzeige 10 aufnimmt. Bei Drehung dieses Teils um einen nicht bezeichneten Drehpunkt wird der Scanner 3 zugänglich und betriebsbereit.

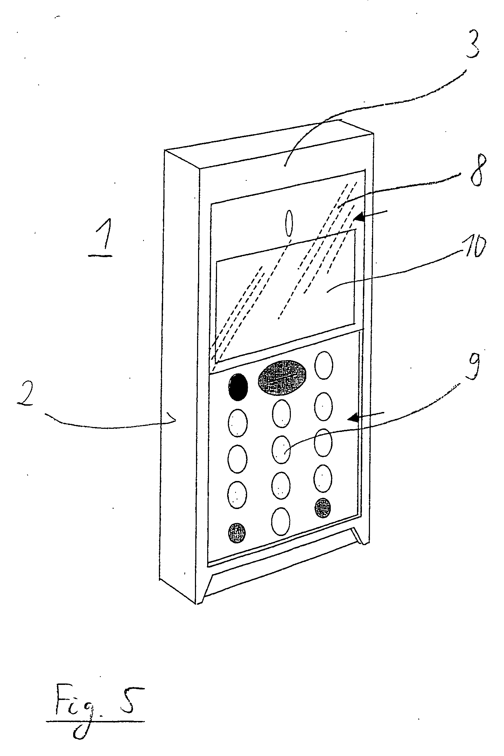

Gleichfalls möglich ist es, den Scanner 3 in die die Tastatur abdeckende Klappe 6 des Telefons 1 zu integrieren, wie es in Fig. 4 illustriert ist.

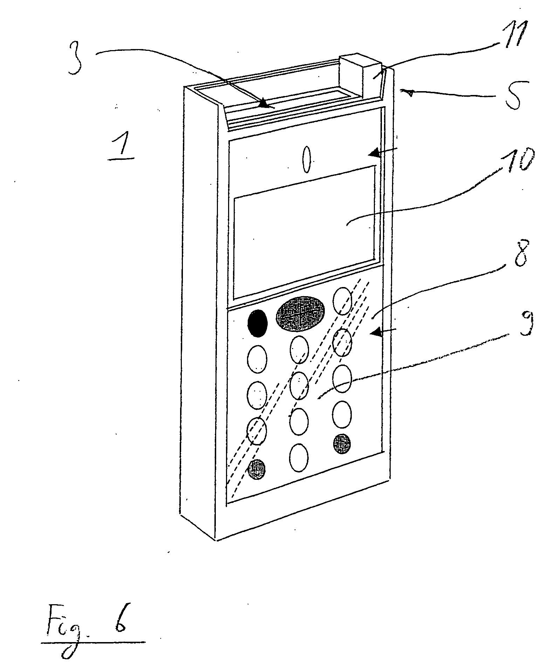

In den Figuren 5 bis 7 ist dargestellt, wie das Telefon 1 mit einer verschiebbaren Abdeckung 8 ausgestattet werden kann, die die Bedienung des Telefons erleichtert.

Die in einer nicht bezeichneten Führung angeordnete verschiebbare Abdeckung 8 ist rolladenartig ausgebildet und befindet sich in Fig. 5 in einer oberen Position. In dieser Position ist die Tastatur 9 des Telefons zugänglich und mittels nicht dargestellter Schaltelemente das Telefon in den Betriebsmodus "Telefonieren" geschaltet. Das optische Lesegerät 3 ist in dieser Stellung von der Abdeckung 8 abgedeckt, so dass das Telefon 1 in gewohnter Weise benutzt werden kann.

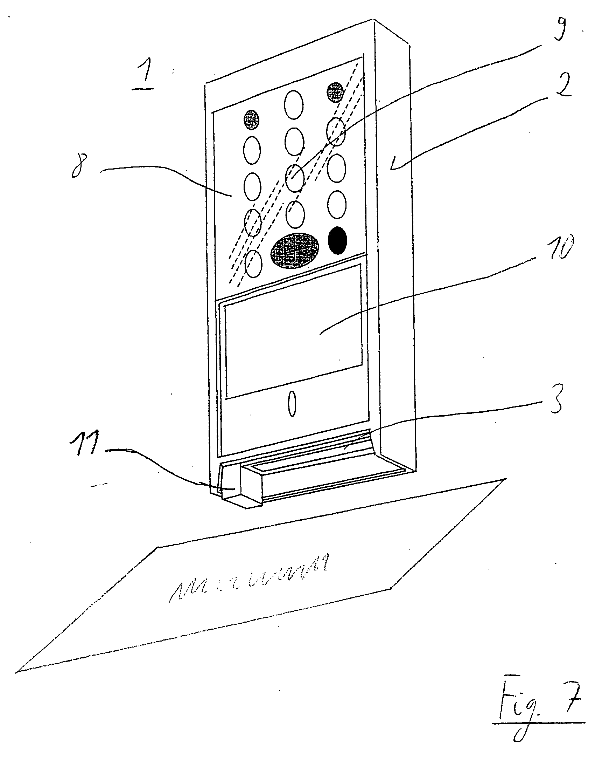

In Fig. 6 ist zu sehen, dass die Abdeckung 8 jetzt nach unten verschoben wurde, so dass der Bereich der Tastatur 9 abgedeckt ist; gleichzeitig ist der obere Bereich 5 des Telefons 1 freigegeben, so dass der Scanner 3 zugänglich ist. Insbesondere ist der Schalter 11 zugänglich, die hier als Drucktaster ausgeführt ist.

Durch die Verschiebung der Abdeckung 8 ist mittels nicht dargestellter Schaltelemente das Telefon in den Betriebsmodus "Scannen" umgeschaltet worden. Das Telefon 1 kann nun um 180° gedreht werden - s. Fig. 7 - und auf den zu lesenden Text aufgesetzt bzw. über den zu lesenden Text gezogen werden. Beim Aufsetzen auf das schematisch skizzierte Papier wird der Taster 11 betätigt, so dass der Lesevorgang aktiviert wird.

Beim Aufsetzen des Telefons auf die Unterlage (Papier) aktiviert der Taster 11 eine in das Telefon integrierte Lichtquelle zwecks gleichmäßiger Beleuchtung des zu lesenden Textes. Die Beleuchtungszeit beträgt beispielsweise 0,5 Sekunden. Das Verlöschen der Beleuchtung signalisiert dem Benutzer, dass der Scannvorgang abgeschlossen ist.

In der optischen Anzeige 7 (s. Figuren 1 und 2) kann gesehen werden, was der Scanner 3 eingelesen hat.

Die Steuer-Software des Telefons ist so ausgeführt, dass die eingelesenen Zeichen angezeigt, gespeichert und per SMS (Short Message Service) übertragen werden können.

Mit dem erfindungsgemäß vorgeschlagenen Mobiltelefon ist es möglich, ohne nennenswerte Einarbeitung in das System Daten in das Telefon einzulesen und zu versenden, so dass in einfacher Weise "e-commerce" betrieben werden kann. Es sind hierzu namentlich kaum Eingaben über die Tastatur des Telefons oder Spracheingaben nötig. Das Telefon ist damit zum genannten Zweck auch multinational und unabhängig vom Anwendungszweck nutzbar.

Im Bereich des Versandhandels können beispielsweise die vom Scanner zu lesenden alpha-numerischen Klartextzeichen aus einem Katalog entnommen werden. Hinzu können noch in Code-Darstellung enthaltene Zeichen kommen, die die Identifikation des zu bestellenden Teils erleichtert. Der entsprechende Katalog enthält also sämtliche Daten, die für eine Bestellung benötigt werden, wobei diese mittels SMS an den Lieferanten übertragen werden. Die eingescannten Zeichen können vor der Übermittlung im Telefon gespeichert werden.

### Bezugszeichenliste:

- 1: mobiles Telefon (Handy)
- 2: Gehäuse
- 3: optisches Lesegerät (Scanner)
- 4: Bodenbereich des Telefons
- 5: oberer Bereich des Telefons
- 6: Klappe
- 7: optische Anzeige
- 8: verschiebbare Abdeckung
- 9: Tastatur des Telefons
- 10: Hauptanzeige
- 11: Schaltelement

## Patentansprüche

1. Mobiles Telefon (1), das ein Gehäuse (2) aufweist,
**dadurch gekennzeichnet, dass**
in das Gehäuse (2) ein optisches Lesegerät (Scanner) (3) integriert ist, das mit dem Telefon (1) in Datenkommunikation steht.

2. Mobiles Telefon nach Anspruch 1, **dadurch gekennzeichnet, dass** das optische Lesegerät (3) als einzeiliger Scanner ausgebildet ist.

3. Mobiles Telefon nach Anspruch 1 oder 2, **dadurch gekennzeichnet, dass** das optische Lesegerät (3) in den Bodenbereich (4) des Telefons (1) integriert ist.

4. Mobiles Telefon nach Anspruch 1 oder 2, **dadurch gekennzeichnet, dass** das optische Lesegerät (3) in den oberen Bereich (5) des Telefons (1) integriert ist.

5. Mobiles Telefon nach Anspruch 1 oder 2, **dadurch gekennzeichnet, dass** das Gehäuse (2) des Telefons (1) eine Klappe (6) aufweist, in die das optische Lesegerät (3) integriert ist.

6. Mobiles Telefon nach einem der Ansprüche 1 bis 5, **dadurch gekennzeichnet, dass** das Telefon (1) eine optische Anzeige (7) zur Kontrolle der mit dem optischen Lesegerät (3) gelesenen Graphik aufweist.

7. Mobiles Telefon nach einem der Ansprüche 1 bis 6, **dadurch gekennzeichnet, dass** das Telefon (1) eine verschiebbare Abdeckung (8) aufweist, durch deren Verschiebung über einen von der Abdeckung betätigten Schalter wahlweise die Telefonfunktion oder die Lesefunktion aktiviert werden kann.

8. Mobiles Telefon nach Anspruch 7, **dadurch gekennzeichnet, dass** die verschiebbare Abdeckung (8) die Tastatur (9) des Telefons (1) abdecken kann.

9. Mobiles Telefon nach Anspruch 7, **dadurch gekennzeichnet, dass** die verschiebbare Abdeckung (8) die Hauptanzeige (10) des Telefons (1) abdecken kann.

10. Mobiles Telefon nach einem der Ansprüche 1 bis 9, **dadurch gekennzeichnet, dass** es ein Schaltelement (11) aufweist, mit dem das optische Lesegerät (3) aktiviert werden kann.

11. Mobiles Telefon nach Anspruch 10, **dadurch gekennzeichnet, dass** das Schaltelement (11) bei Aktivierung des optischen Lesegeräts (3) die Sprechfunktion des Telefons (1) deaktivieren kann.

12. Mobiles Telefon nach Anspruch 10 oder 11, **dadurch gekennzeichnet, dass** das Schaltelement (11) als Drucktaster ausgebildet ist, der bei Betätigung das optische Lesegerät (3) aktiviert.

13. Mobiles Telefon nach Anspruch 10 oder 11, **dadurch gekennzeichnet, dass** das Schaltelement (11) als Schalter ausgebildet ist, der bei Änderung der Position des Telefons (1) im Gravitationsfeld der Erde das optische Lesegerät (3) aktiviert.

14. Mobiles Telefon nach Anspruch 13, **dadurch gekennzeichnet, dass** das Schaltelement (11) als Quecksilberschalter ausgebildet ist.
